# EUROPEAN PATENT SPECIFICATION

(11) **EP 2 361 811 B1**
(45) Date of publication and mention of the grant of the patent: **26.12.2018**
(21) Application number: 11001291.1
(22) Date of filing: 17.02.2011
(51) Int. Cl.: B60S 1/04, B60S 1/34

(54) **Wiper system for vehicle windows**
Fahrzeugscheibenwischersystem
Système d'essuie-glace pour fenêtres de véhicule

(30) Priority: 18.02.2010 DE 102010008494
(43) Date of publication of application: 31.08.2011
(73) Proprietor: Valeo Wischersysteme GmbH, 74321 Bietigheim-Bissingen (DE)
(72) Inventor: Scholl, Wolfgang, 74376 Gemmrigheim (DE); Waible, Siegfried, 74223 Flein (DE)
(74) Representative: Patentanwälte Behrmann Wagner PartG mbB

(56) References cited:
- EP-A1- 1 103 434
- EP-A2- 1 074 442
- WO-A1-02/094622
- DE-A1-102008 047 031
- FR-A1- 2 716 656
- US-A- 5 735 171

## Description

The invention relates to a wiper system for vehicle windows, in particular vehicle windscreens according to the introductory clause of Claim 1.

Such a wiper system is known from the applicant's subsequently published DE 10 2008 047 031 A1.

The wiper shafts in road vehicles or their wiper systems, generally projecting over the outer contour of the vehicle body, and the elements of a wiper system such as wiper arms or bearing parts of such wiper arms etc. which are provided thereon, constitute a considerable source of risk for injuries in accidents, in particular also in accidents involving persons e.g. with pedestrians and/or cyclists.

In order to minimize the risk of injury, it is known to construct wiper systems for vehicles basically so that with an application of force exceeding a specified threshold value or a specified release force, in particular in an axial direction parallel or approximately parallel to the wiper shaft axis, the respective wiper shaft "dips" into the vehicle body, i.e. draws away axially into the vehicle body. This drawing away movement can be realized for example inter alia by axial displacement of the wiper shaft in its wiper shaft bearing. In the normal state, i.e. for the normal wiper operation, the wiper shaft is then secured against axial displacement by an axial securing element. This axial securing element is generally a spring ring held in an annular groove of the wiper shaft, said spring ring resting with a partial region projecting out from the annular groove for the axial securing of the wiper shaft against a surface of the wiper shaft bearing (DE 198 51 881 A1). The annular groove is slightly chamfered on its side facing away from the wiper shaft bearing, so that with an application of force onto the wiper shaft exceeding a release force, the spring ring, with widening of the bevelled side of the annular groove, is moved out from the latter, so that the axial securing by the spring ring is cancelled and thereby the axial drawing-away movement of the wiper shaft is possible. Fundamental problems exist here inter alia with regard to a reproducible setting of the release force. Furthermore, a plurality of individual parts and the mounting thereof are necessary.

US 5,735,171 discloses a covering element in form of a so-called retainer clip, which is made out of metal. The covering element includes three notches, which are formed in the shaft engaging surface of the covering element. Due to the hard material of the covering element, controlled sharing of the covering element is difficult to achieve.

It is also known, furthermore, to provide a protective sleeve or covering cap of sheet metal (WO 2005/075265 A1) or a covering element of plastic (DE 10 2006 027 345 A1) on wiper shaft bearings for covering the transition, arranged in the mounted state of the wiper system on the outer side of the vehicle between the wiper shaft and the wiper shaft bearing housing. The covering cap of sheet metal or the covering element of plastic serve respectively at the same time as an axial securing element for the wiper shaft and engage for this with a corrugation formed into the sheet metal or with an integrally formed annular bead into an annular groove of the wiper shaft and namely such that with an external application of force onto the wiper shaft exceeding a release force, the axial securing is cancelled by the moving of the corrugation or the annular bead out from the annular groove. A deformation of the covering cap or of the covering element takes place here, so that a drawing-away movement of the wiper shaft is possible. Fundamental problems also exist here with regard to a reproducible setting of the release force.

In order to solve the problem which was raised with regard to the reproducible setting of the release force, in DE 10 2008 047 031 A1 mentioned in the introduction a covering element which is constructed as a covering cap is proposed, in which a material section engages into an undercut of the wiper shaft, with the material section being able to shear off in the case of an external application of force which exceeds a permissible extent. However, mounting has proved to be a problem for the case where the covering element is constructed as a separate component which is not injected on the wiper shaft. Owing to the necessary material thickness of the covering element in connection with the component geometries of the undercut and covering element, in particular very high mounting forces are necessary here, which can lead to damage or plastic deformation of the covering element. It is an object of the invention to indicate a wiper system which makes it possible, with an economically priced manufacture, to set the respective release force very precisely in a reproducible manner, wherein a simple mounting of the covering element is to be made possible without the risk of damage. This problem is solved by a wiper system having the features of Claim 1.

Deviating from the previously published prior art, in the wiper system according to the invention the cancelling or freeing of the axial securing is not achieved by an elastic widening of a securing ring or of a section, but rather by the shearing off of at least one material section of the axial securing element, with the material section cooperating with the axial support surface or the undercut on the wiper shaft. Here, by the choice of the material for the axial securing element or the covering cap, and hence for the material section which is able to be sheared off, and by the dimensions and/or by the cross-section of the section which is able to be sheared off, the release force can be set reproducibly and permanently very precisely to the respective desired value.

Advantageous further developments of the wiper system according to the invention are indicated in the subclaims. All combinations of at least two of features disclosed in the claims, the description and/or the figures fall within the scope of the invention.

An embodiment is particularly preferred, in which several notches are provided which are arranged at uniform angular distances, so that lamellar bending sections are formed. Through the construction of the notches, in which a material section remains respectively in the region of the notches, the entry of water or moisture through the covering cap is reliably prevented here. At the same time, through the bending sections a uniform (elastic) deformation of the bending sections is made possible on mounting, without the mounting forces being particularly high. Furthermore, provision is preferably made that the at least one notch is constructed in a V-shape in cross-section. Thereby, the size of the notch is minimized with a specified necessary deformation of the bending sections.

Instead of the construction of notches, it is, however, also conceivable to provide recesses in the form of (continuous) cuts or recesses, wherein the cuts or recesses extend from the inner circumference of the covering element in a star shape over a partial region of the diameter of the disc-shaped covering element.

Further advantages, details and features of the invention will be apparent from the following description of preferred example embodiments and with the aid of the drawings, in which are shown in:
- Fig. 1: in simplified representation the motor- or wiper plate (tube plate) of a window wiper system, to be mounted on a vehicle body,

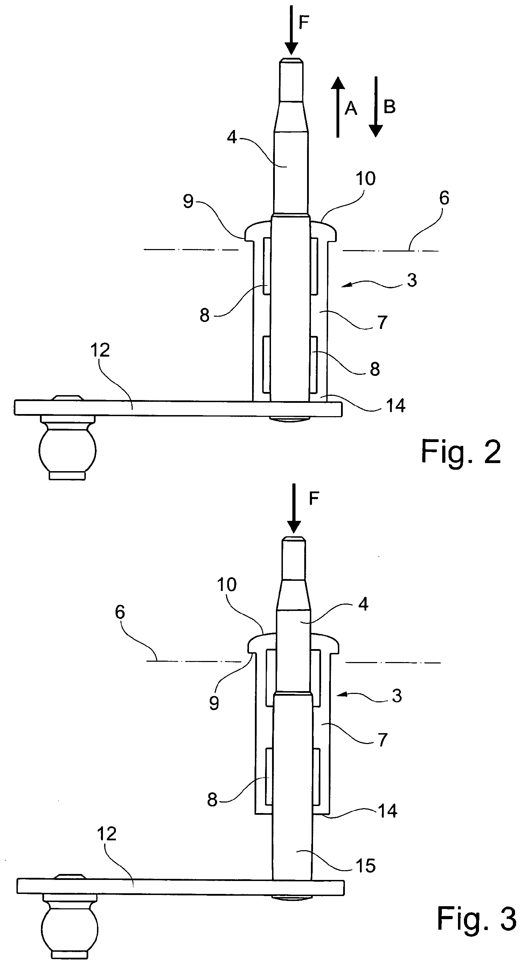

- Fig. 2 and Fig. 3: in individual illustrations one of the two wiper shaft bearings of the plate of Fig. 1 together with the wiper shaft and with the drive element or crank arm of the window wiper drive provided on the wiper shaft, and namely in the normal state (Fig. 2) and with the wiper shaft displaced axially into a drawing-away position (Fig. 3),
- Fig. 4: in an enlarged partial illustration the wiper shaft bearing in normal state,
- Fig. 5: in an enlarged illustration, partially in section, a wiper shaft bearing which is modified with respect to Fig. 4 and a modified covering element and
- Fig. 6 and Fig. 7: the covering element of Fig. 5 in a perspective top and bottom view.

In the figures, a wiper motor or wiper plate, embodied as tube plate 1, of a window wiper system for vehicles, in particular road vehicles, is illustrated. The tube plate 1 consists substantially of a tube-like carrier 2 which is provided at its two ends respectively with a wiper shaft bearing 3 for the rotatable or pivotable mounting of a wiper shaft 4. Here, after the mounting in a vehicle of the window wiper system or of the tube plate 1, the latter projects by a length, which the tapering first wiper shaft end 5 has, over the outer contour 6 of the vehicle, indicated by the broken line, or of the vehicle body, in order to thereby make possible a fastening of a wiper arm, which is not illustrated, on the one wiper shaft end 5. In a modification of the illustrated example embodiment, it is of course also possible or respectively is also often applied in practice, that the first wiper shaft end 5 is arranged within the outer contour 6 of the vehicle.

The respective wiper shaft bearing 3 consists substantially of a wiper shaft bearing housing 7, which is produced for example from a metallic material and in which two bearing bushes 8, which are staggered with respect to each other in axial direction of the wiper shaft 4, are provided for bearing the wiper shaft 4. The wiper shaft housing 7, which in the mounted state projects outwards by a first housing end 9 over the outer contour 6 of the vehicle or of the vehicle body, is fastened respectively at an end of the carrier 2 of the tube plate 1, and namely for example with an integrally formed pin. The tube plate 1 is able to be fastened on the inner side of the vehicle body by means which are not illustrated.

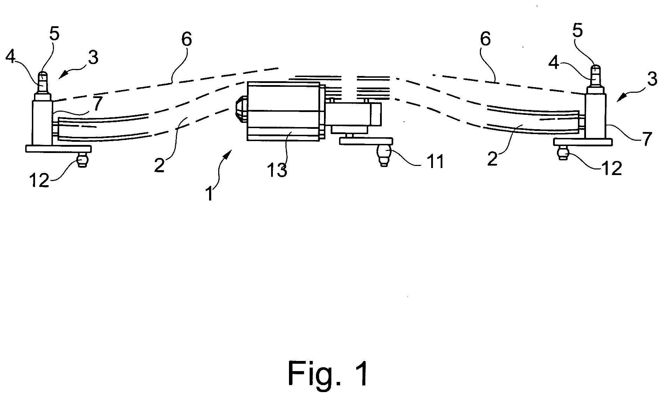

The wiper shafts 4 are able to be driven pivotably about their axes in the manner known to the specialist in the art via a crank drive, of which only the crank arm 11, provided on the output shaft of an electromotive drive 13 and the crank arms 12 respectively provided on the wiper shafts 4 are illustrated in Figure 1. In the illustrated embodiment, the crank arms 12 are situated respectively on the second shaft end 15 facing away from the first wiper shaft end 5 and guided out from the second housing end 14 of the wiper shaft bearing housing 5.

As the figures show, a covering cap 10 is provided at the first housing end 5, associated with the outer side of the vehicle, of each wiper shaft bearing 3 on the associated wiper shaft 4, said covering cap overlapping or engaging over with its edge region the first housing end 9 of the wiper shaft bearing housing 7 which is constructed in a circular cylinder shape at least there on the outer surface. The covering cap 10 is produced as a shaped part from a suitable plastic in particular by injection moulding. Hereby, the respective wiper shaft bearing 3 is already protected against the penetration of moisture, water, dirt etc. solely by the covering cap 10, but additionally also by a sealing ring 17 surrounding the wiper shaft 4 and arranged beneath the covering cap 10. The sealing ring 17 is held in a space which is delimited radially by the outer surface of the wiper shaft 4 and the inner surface of the wiper shaft housing 7 and also axially by one of the two bearing bushes 8 and by the under- or inner side of the base 18 of the covering cap 10. The covering cap 10 rests axially against the end face, lying on the exterior, of the wiper shaft bearing housing 7 or of the first housing end 9 with the inner side of the base 18 or with a ring 19 there of a wear-resistant material, for example of a wear-resistant plastic or metal, held for example by forming integrally on the covering cap 10 and surrounding the wiper shaft 4 concentrically.

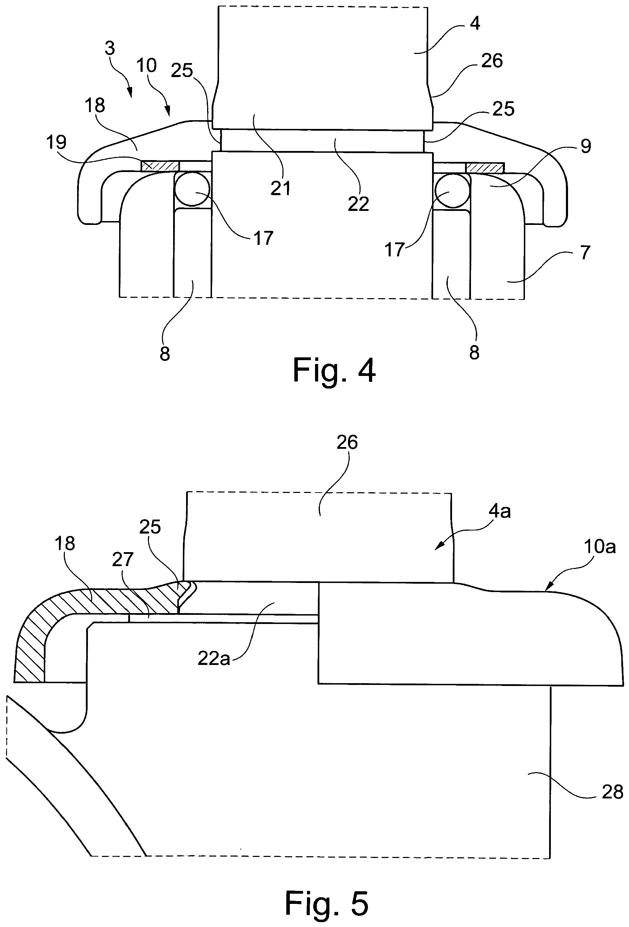

In the region of the covering cap 10, the wiper shaft 4 is provided on its first shaft region 21, projecting from the wiper shaft bearing housing 7, with an annular groove 22 surrounding the axis of the wiper shaft 4 in a ring shape and open radially towards the exterior, into which groove a ring-shaped material section 25 of the covering cap 10 extends and which forms an axial undercut for this material section 25. As Fig. 4 shows in particular, the wiper shaft 4 is furthermore embodied so that it has a reduced external diameter adjoining the first shaft region 21 in a second shaft region 26.

Whilst the wiper shaft 4 is secured for example by the crank 12, resting on the first housing end 9, against an axial displacement in the direction of the arrow A, i.e. with the window wiper system mounted towards the outer side of the vehicle body, a covering cap 10 serves in this embodiment as an axial securing element against axial displacement of the wiper shaft 4 in the direction of the arrow B, i.e. with the window wiper system mounted against an axial displacement of the wiper shaft 4 in the direction of the vehicle body or against a dipping of the wiper shaft 4 into the vehicle, and namely by supporting on the first housing end 9 via the ring 19.

By corresponding choice of the material for the covering cap 10, by corresponding construction of the ring-like material section 25 and of the annular groove 22 it is achieved that a drawing away or dipping of the wiper shaft 4 with shearing off of the material section 25 for example in an accident involving persons takes place when an external application of force F, exerted onto the first wiper shaft end 5, exceeds a release force. The release force, at which this protective function is released, i.e. the respective wiper shaft 4 is displaced in the direction of the arrow B into the interior of the vehicle, can be set reproducibly and permanently in a very precise manner in this embodiment by the shape and depth of the annular groove 22 and by the shape of the ring-like material section 25. By the external cross-section of the wiper shaft 4 narrowing at the second shaft region 26, it is ensured inter alia that after the releasing of the protective function the wiper shaft 4 can move axially in an unimpeded manner through the covering cap 10, i.e. the protective function is not prevented or impaired for instance by friction between the covering cap 10 and the wiper shaft 4. In order to achieve clear and reproducible conditions for the release force or on shearing off of the material section 25, the transition between the annular groove 22 forming the undercut and the adjoining circumferential surface of the wiper shaft 4 is formed at right angles and as far as possible with a sharp edge at least on the side of the annular groove 22 facing the first wiper shaft end 5. The ring-shaped material section 25 of the covering cap 10 is adapted to the cross-sectional shape, rectangular in this embodiment, of the annular groove 22, so that it fills the annular groove 22 completely or substantially completely.

In Fig. 5 a modified covering cap 10a is illustrated, in which the latter engages into an annular groove 22a, which has an approximately triangular cross-section, in which the greatest groove depth is on the side facing the second shaft region 26. Furthermore, the covering cap 10a lies with its base 18 directly on a step 27 of a region 28, enlarged in diameter, of the wiper shaft 4a.

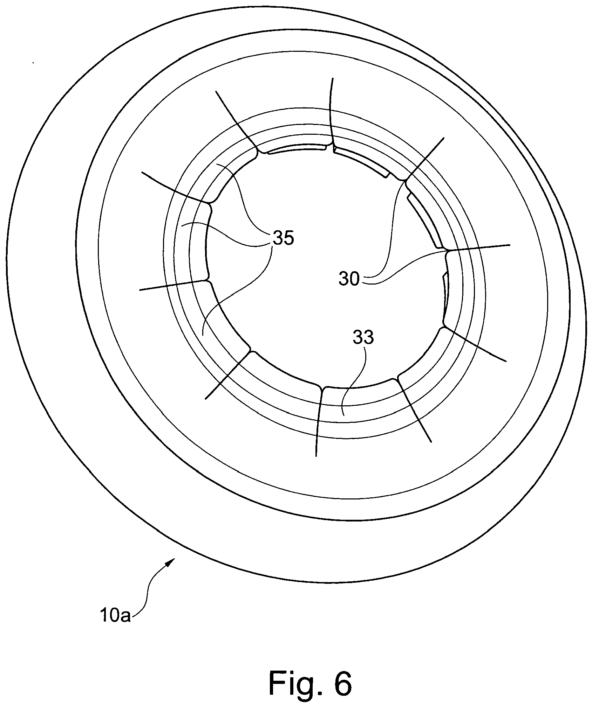

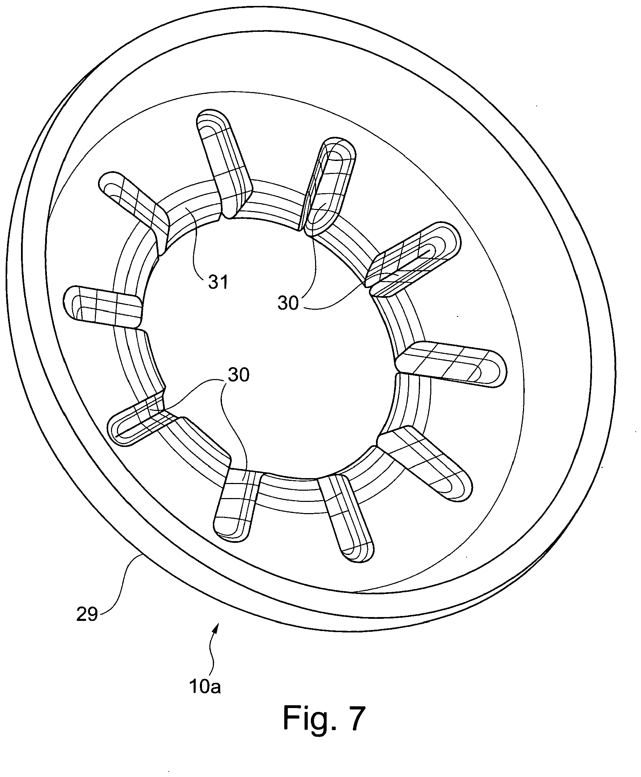

As can be seen in particular by means of Fig. 6 and 7, the covering cap 10a, which is preferably embodied as an injection moulded part, has on its underside 29 several notches 30, arranged at uniform angular distances from each other. The notches 30, which are V-shaped in cross-section and are aligned in a star shape to the longitudinal axis of the covering cap 10a, proceed here from the inner edge 31 of the covering cap 10a and extend approximately into the central diameter region of the covering cap 10a. The notches 30 preferably do not extend up to the upper side 33 of the covering cap 10a; they therefore do not form slits.

However, in a modification of the illustrated example embodiment, it is also conceivable to form the notches 30 as continuous slits or recesses.

By the notches 30, lamellar bending regions 35 are formed which are delimited by the notches 30 and which are elastically deformable in the fitting direction corresponding to the direction of the arrow B of the covering cap 10a, so that the internal diameter of the covering cap 10a enlarges here on the inner edge 31. By the bending regions 35, the rigidity of the covering cap 10a is therefore reduced compared with the other regions of the covering cap 10a. In particular, the mounting or the fitting of the covering cap 10a onto the first shaft end 5 is thereby facilitated.

In addition, it is to be mentioned that what has been stated with regard to the construction of the notches 30 also applies of course with regard to the covering cap 10, i.e. the covering cap 10 also has corresponding notches 30.

The mounting of the respective wiper shaft 4, 4a in the associated wiper shaft bearing 3 takes place e.g. in a particularly simple manner in that the wiper shaft 4, 4a, which is pre-mounted with the crank 12, is pushed in with its first wiper shaft end 5 forward into the wiper shaft bearing housing 7 or into the bearing there, formed by the bearing bushes 8, so that the crank 12 lies directly against the second housing end 14 or via an intermediate ring, and the wiper shaft 4, 4a projects with its first wiper shaft end 5 out from the first housing end 9. Following this, the sealing ring 17 is pushed onto the wiper shaft 4, 4a and is inserted into the wiper shaft bearing housing 7, so that it lies against the bearing bush 8 there. In a further mounting step, the covering cap 10, 10a is placed onto the wiper shaft 4, 4a and is fastened under elastic deformation on the first wiper shaft region 21 by locking in the annular groove 22.

Basically the possibility also exists for pre-mounting the covering cap 10, 10a on the wiper shaft 4, 4a and then inserting the wiper shaft 4, 4a with its second wiper shaft end 15 forward into the wiper shaft bearing housing 7 and then mounting the crank 12 on the wiper shaft end 15 which is guided out from the wiper shaft bearing housing 7.

The invention was described above in example embodiments. It is evident that alterations and modifications are possible, without thereby departing from the scope of the appended claims which forms the basis of the invention.

### List of reference numbers

- 1: plate
- 2: carrier
- 3: wiper shaft bearing
- 4, 4a: wiper shaft
- 5: first wiper shaft end
- 6: outer contour
- 7: wiper shaft bearing housing
- 8: bearing bush
- 9: first housing end
- 10, 10a: covering cap
- 11, 12: crank arm
- 13: drive
- 14: second housing end
- 15: second shaft end
- 17: sealing ring
- 18: base
- 19: ring
- 21: first shaft region
- 22, 22a: annular groove
- 25: material section
- 26: second shaft region
- 27: step
- 28: region
- 29: underside
- 30: notch
- 31: edge
- 33: upper side
- 35: bending region
- A, B: axial direction
- F: external application of force

## Claims

1. Wiper system for vehicle windows, in particular for vehicle windscreens, with at least one wiper shaft (4; 4a) mounted in a wiper shaft bearing housing (7) of a wiper shaft bearing (3) and able to be driven by a wiper drive (13), which wiper shaft projects by a first wiper shaft end (5), serving for fastening a wiper arm, axially from a first housing side (9) of the wiper shaft bearing housing (7), with a covering element (10; 10a) covering the transition between the wiper shaft (4; 4a) and the wiper shaft bearing housing (7) on the first housing side (9) and able to be engaged onto the wiper shaft (4; 4a), wherein the covering element (10; 10a) is constructed as an axial securing element for securing the wiper shaft (4; 4a) against axial displacement in the form of a drawing-away or dipping movement, in which the first wiper shaft end (5) moves axially in the direction of the wiper shaft bearing housing (7) and/or into the latter, wherein with an external application of force (F) onto the wiper shaft (4; 4a) exceeding a release force the effect of the covering element (10; 10a) is cancelled, wherein the covering element (10; 10a) on the one hand rests against the wiper shaft bearing housing (7) and on the other hand rests axially against the wiper shaft (4; 4a) **characterised in that** a material section (25) is engaging behind an undercut (22; 22a) on the wiper shaft (4; 4a), and wherein with an external application of force (F) exceeding the release force the material section (25) of the covering element (10; 10a) is able to be sheared off to release the drawing-away or dipping movement, wherein the covering element (10; 10a) has at least one section (35) with a lower rigidity, pointing in the mounting direction (B) of the covering element (10; 10a) onto the wiper shaft (4; 4a), wherein the section (35) is constructed on a radially inner region of the covering element (10; 10a), and that the covering element (10; 10a) is constructed as an injection moulded part consisting of plastic.

2. Wiper system according to Claim 1, **characterized in that** the section (35) is delimited by at least one notch (30), wherein the notch (30) extends from the inner circumference (31) of the material section (25) over a partial region of the disc-shaped covering element (10; 10a).

3. Wiper system according to Claim 2, **characterized in that** several notches (30) are provided, which are arranged at uniform angular distances from each other, so that the sections are constructed as lamellar bending sections (35).

4. Wiper system according to Claim 2 or 3, **characterized in that** the at least one notch (30) is constructed in a V-shape in cross-section.

5. Wiper system according to Claim 1, **characterized in that** the section (35) is delimited by at least one recess extending from the underside (29) up to the upper side (33) of the covering element (10; 10a), wherein the at least one recess extends from the inner circumference (31) of the covering element (10; 10a) over a partial region of the disc-shaped covering element (10; 10a).

6. Wiper system according to one of Claims 1 to 5, **characterized in that** the at least one material section (25), which is able to be sheared off, is a ring-shaped section surrounding the axis of the wiper shaft (4; 4a).

7. Wiper system according to one of claims 1 to 6, **characterized in that** the undercut (22; 22a) is formed by a side surface of an annular groove provided on the wiper shaft (4; 4a) and surrounding its axis concentrically.

8. Wiper system according to one of claims 1 to 7, **characterized in that** the undercut (22, 22a) forms an axial contact surface for the material section (25), which is able to be sheared off, to which the outer surface of the wiper shaft (4; 4a) adjoins in a sharp-edged or right-angled manner.

9. Wiper system according to one of claims 1 to 8, **characterized in that** a wiper shaft section (26) narrowing contrary to the direction of the drawing-away or dipping movement adjoins the undercut (22; 22a) or a wiper shaft section (21) having this undercut (22, 22a).

10. Wiper system according to one of claims 1 to 9, **characterized in that** the covering element (10) on a region (19) cooperating for axial support with the wiper shaft bearing housing (7) consists of a material having increased strength, for example of a metallic material.

11. Wiper system according to Claim 10, **characterized in that** the region cooperating with the wiper shaft bearing housing (7) is formed by a ring (19), concentrically surrounding the axis of the wiper shaft (4), on the covering element (10).

12. Wiper system according to one of claims 1 to 11, **characterized in that** the covering element is constructed as covering cap (10; 10a) with an edge engaging over the wiper shaft bearing housing (7) on the first side, and with a cap base (18), through which the wiper shaft (4; 4a) projects and on which the at least one material section (25), which is able to be sheared off, is formed engaging behind the undercut (22, 22a) on the wiper shaft (4; 4a).

13. Wiper system according to one of claims 1 to 12, **characterized by** at least one ring-shaped seal (17) which is held in an annular space formed between the wiper shaft (4, 4a) and the inner surface of the wiper shaft bearing housing (7), which annular space is delimited axially by the covering element (10; 10a) and opposite by a bearing element housed in the wiper shaft bearing housing (7), for example by a bearing bush (8).

## Patentansprüche

1. Wischeranlage für Fahrzeugfenster, insbesondere für Fahrzeugwindschutzscheiben, wobei wenigstens eine Wischerwelle (4; 4a) in einem Wischerwellenlagergehäuse (7) eines Wischerwellenlagers (3) befestigt und in der Lage ist, durch einen Wischerantrieb (13) angetrieben zu werden, wobei die Wischerwelle um ein erstes Wischerwellenende (5), das zum Befestigen eines Wischerarms dient, axial von einer ersten Gehäuseseite (9) des Wischerwellenlagergehäuses (7) vorsteht, wobei ein Abdeckelement (10; 10a) den Übergang zwischen der Wischerwelle (4; 4a) und dem Wischerwellenlagergehäuse (7) auf der ersten Gehäuseseite (9) abdeckt und in der Lage ist, auf der Wischerwelle (4; 4a) in Eingriff gebracht zu werden, wobei das Abdeckelement (10; 10a) als ein axiales Sicherungselement ausgebildet ist, um die Wischerwelle (4; 4a) gegen eine axiale Verschiebung in Form einer Wegzieh- oder Tauchbewegung zu sichern, bei der sich das erste Wischerwellenende (5) axial in der Richtung des Wischerwellenlagergehäuses (7) und/oder in Letzteres hinein bewegt, wobei, wenn eine äußere Einwirkung einer Kraft (F) auf die Wischerwelle (4; 4a) eine Auslösekraft überschreitet, der Effekt des Abdeckelements (10; 10a) aufgehoben wird, wobei das Abdeckelement (10; 10a) einerseits an dem Wischerwellenlagergehäuse (7) anliegt und andererseits axial an der Wischerwelle (4; 4a) anliegt, **dadurch gekennzeichnet, dass** ein Materialabschnitt (25) eine Hohlkehle (22; 22a) an der Wischerwelle (4; 4a) hintergreift, und wobei, wenn eine äußere Einwirkung einer Kraft (F) die Auslösekraft überschreitet, der Materialabschnitt (25) des Abdeckelements (10; 10a) in der Lage ist, abgeschert zu werden, um die Wegzieh- oder Tauchbewegung auszulösen, wobei das Abdeckelement (10; 10a) wenigstens einen Abschnitt (35) mit einer geringeren Steifigkeit aufweist, der in der Montagerichtung (B) des Abdeckelements (10; 10a) auf die Wischerwelle (4; 4a) zeigt, wobei der Abschnitt (35) auf einem radial inneren Bereich des Abdeckelements (10; 10a) ausgebildet ist, und dass das Abdeckelement (10; 10a) als ein aus Kunststoff bestehendes Spritzgussteil ausgebildet ist.

2. Wischeranlage nach Anspruch 1, **dadurch gekennzeichnet, dass** der Abschnitt (35) durch wenigstens einen Einschnitt (30) begrenzt ist, wobei sich der Einschnitt (30) von dem Innenumfang (31) des Materialabschnitts (25) über einen Teilbereich des scheibenförmigen Abdeckelements (10; 10a) erstreckt.

3. Wischeranlage nach Anspruch 2, **dadurch gekennzeichnet, dass** mehrere Einschnitte (30) vorgesehen sind, die in einheitlichen Winkelabständen voneinander angeordnet sind, so dass die Abschnitte als lamellenartige Biegeabschnitte (35) ausgebildet sind.

4. Wischeranlage nach Anspruch 2 oder 3, **dadurch gekennzeichnet, dass** der wenigstens eine Einschnitt (30) im Querschnitt als V-Form ausgebildet ist.

5. Wischeranlage nach Anspruch 1, **dadurch gekennzeichnet, dass** der Abschnitt (35) durch wenigstens eine Ausnehmung begrenzt ist, die sich von der Unterseite (29) bis zu der Oberseite (33) des Abdeckelements (10; 10a) erstreckt, wobei sich die wenigstens eine Ausnehmung von dem Innenumfang (31) des Abdeckelements (10; 10a) über einen Teilbereich des scheibenförmigen Abdeckelements (10; 10a) erstreckt.

6. Wischeranlage nach einem der Ansprüche 1 bis 5, **dadurch gekennzeichnet, dass** der wenigstens eine abscherbare Materialabschnitt (25) ein ringförmiger Abschnitt ist, der die Achse der Wischerwelle (4; 4a) umgibt.

7. Wischeranlage nach einem der Ansprüche 1 bis 6, **dadurch gekennzeichnet, dass** die Hohlkehle (22; 22a) durch eine Seitenfläche einer Ringnut gebildet ist, die an der Wischerwelle (4; 4a) vorgesehen ist und ihre Achse konzentrisch umgibt.

8. Wischeranlage nach einem der Ansprüche 1 bis 7, **dadurch gekennzeichnet, dass** die Hohlkehle (22; 22a) eine axiale Kontaktfläche für den abscherbaren Materialabschnitt (25) bildet, an die die Außenfläche der Wischerwelle (4; 4a) auf eine scharfkantige oder rechtwinklige Weise angrenzt.

9. Wischeranlage nach einem der Ansprüche 1 bis 8, **dadurch gekennzeichnet, dass** ein Wischerwellenabschnitt (26), der sich entgegengesetzt zu der Richtung der Wegzieh- oder Tauchbewegung verengt, an die Hohlkehle (22; 22a) oder einen Wischerwellenabschnitt (21), der diese Hohlkehle (22; 22a) aufweist, angrenzt.

10. Wischeranlage nach einem der Ansprüche 1 bis 9, **dadurch gekennzeichnet, dass** das Abdeckelement (10) auf einem Bereich (19), der für eine axiale Abstützung mit dem Wischerwellenlagergehäuse (7) zusammenwirkt, aus einem Material besteht, das eine erhöhte Festigkeit aufweist, zum Beispiel aus einem Metallmaterial.

11. Wischeranlage nach Anspruch 10, **dadurch gekennzeichnet, dass** der Bereich, der mit dem Wischerwellenlagergehäuse (7) zusammenwirkt, durch einen Ring (19), der die Achse der Wischerwelle (4) konzentrisch umgibt, auf dem Abdeckelement (10) gebildet ist.

12. Wischeranlage nach einem der Ansprüche 1 bis 11, **dadurch gekennzeichnet, dass** das Abdeckelement als Abdeckkappe (10; 10a) mit einer Kante, die auf der ersten Seite über dem Wischerwellenlagergehäuse (7) eingreift, und mit einer Kappenbasis (18) ausgebildet ist, durch die die Wischerwelle (4; 4a) vorsteht und an der der wenigstens eine abscherbare Materialabschnitt (25) so gebildet ist, dass er die Hohlkehle (22; 22a) an der Wischerwelle (4; 4a) hintergreift.

13. Wischeranlage nach einem der Ansprüche 1 bis 12, **gekennzeichnet durch** wenigstens eine ringförmige Dichtung (17), die in einem zwischen der Wischerwelle (4; 4a) und der Innenfläche des Wischerwellenlagergehäuses (7) gebildeten ringförmigen Raum gehalten ist, wobei der ringförmige Raum axial durch das Abdeckelement (10; 10a) und gegenüber durch ein Lagerelement begrenzt ist, das in dem Wischerwellenlagergehäuse (7) untergebracht ist, zum Beispiel eine Lagerbuchse (8).

## Revendications

1. Système d'essuie-glace pour fenêtres de véhicule, en particulier pour pare-brise de véhicules, avec au moins un arbre d'essuie-glace (4 ; 4a) monté dans un boîtier de palier d'arbre d'essuie-glace (7) d'un palier d'arbre d'essuie-glace (3), et apte à être entraîné par un entraînement d'essuie-glace (13), lequel arbre d'essuie-glace fait saillie, par une première extrémité d'arbre d'essuie-glace (5) servant à attacher un bras d'essuie-glace, axialement depuis un premier côté de boîtier (9) du boîtier de palier d'arbre d'essuie-glace (7), avec un élément de recouvrement (10 ; 10a) recouvrant la transition entre l'arbre d'essuie-glace (4 ; 4a) et le boîtier de palier d'arbre d'essuie-glace (7) sur le premier côté de boîtier (9) et apte à être mis en prise sur l'arbre d'essuie-glace (4 ; 4a), l'élément de recouvrement (10 ; 10a) étant construit sous forme d'élément de fixation axial pour fixer l'arbre d'essuie-glace (4 ; 4a) contre tout déplacement axial sous la forme d'un mouvement d'écartement ou d'affaissement, dans lequel la première extrémité d'arbre d'essuie-glace (5) se déplace axialement dans la direction du boîtier de palier d'arbre d'essuie-glace (7) et/ou dans ce dernier, l'effet de l'élément de recouvrement (10 ; 10a) étant annulé avec une application extérieure de force (F) sur l'arbre d'essuie-glace (4 ; 4a) dépassant une force de libération, l'élément de recouvrement (10 ; 10a) reposant d'une part contre le boîtier de palier d'arbre d'essuie-glace (7) et d'autre part reposant axialement contre l'arbre d'essuie-glace (4 ; 4a), **caractérisé en ce qu'**une section de matériau (25) est en prise derrière une contre-dépouille (22 ; 22a) sur l'arbre d'essuie-glace (4 ; 4a) et la section de matériau (25) de l'élément de recouvrement (10 ; 10a), avec une application extérieure de force (F) dépassant la force de libération, pouvant être sectionnée par cisaillement pour libérer le mouvement d'écartement ou d'affaissement, l'élément de recouvrement (10 ; 10a) ayant au moins une section (35) de plus faible rigidité, tournée dans la direction de montage (B) de l'élément de recouvrement (10 ; 10a) sur l'arbre d'essuie-glace (4 ; 4a), la section (35) étant construite sur une région radialement interne de l'élément de recouvrement (10 ; 10a), et **en ce que** l'élément de recouvrement (10 ; 10a) est construit sous forme de pièce moulée par injection en plastique.

2. Système d'essuie-glace selon la revendication 1, **caractérisé en ce que** la section (35) est délimitée par au moins une encoche (30), l'encoche (30) s'étendant depuis la circonférence interne (31) de la section de matériau (25) sur une région partielle de l'élément de recouvrement en forme de disque (10 ; 10a).

3. Système d'essuie-glace selon la revendication 2, **caractérisé en ce que** plusieurs encoches (30) sont prévues, lesquelles sont agencées à distance angulaire uniforme les unes des autres de telle sorte que les sections soient construites sous forme de sections flexibles lamellaires (35).

4. Système d'essuie-glace selon la revendication 2 ou 3, **caractérisé en ce que** l'au moins une encoche (30) est construite avec une forme en V en section transversale.

5. Système d'essuie-glace selon la revendication 1, **caractérisé en ce que** la section (35) est délimitée par au moins un renfoncement s'étendant depuis le côté inférieur (29) jusqu'au côté supérieur (33) de l'élément de recouvrement (10 ; 10a), l'au moins un renfoncement s'étendant depuis la circonférence interne (31) de l'élément de recouvrement (10 ; 10a) sur une région partielle de l'élément de recouvrement en forme de disque (10 ; 10a).

6. Système d'essuie-glace selon l'une des revendications 1 à 5, **caractérisé en ce que** l'au moins une section de matériau (25) qui est apte à être sectionnée par cisaillement, est une section de forme annulaire entourant l'axe de l'arbre d'essuie-glace (4 ; 4a).

7. Système d'essuie-glace selon l'une des revendications 1 à 6, **caractérisé en ce que** la contre-dépouille (22 ; 22a) est formée par une surface latérale d'une rainure annulaire prévue sur l'arbre d'essuie-glace (4 ; 4a) et entourant son axe de manière concentrique.

8. Système d'essuie-glace selon l'une des revendications 1 à 7, **caractérisé en ce que** la contre-dépouille (22, 22a) forme une surface de contact axiale pour la section de matériau (25), qui est apte à être sectionnée par cisaillement, qui est adjacente à la surface extérieure de l'arbre d'essuie-glace (4 ; 4a) par un bord vif ou un angle droit.

9. Système d'essuie-glace selon l'une des revendications 1 à 8, **caractérisé en ce qu'**une section d'arbre d'essuie-glace (26) se rétrécissant dans le sens inverse du mouvement d'écartement ou d'affaissement est adjacente à la contre-dépouille (22 ; 22a) ou à une section d'arbre d'essuie-glace (21) présentant cette contre-dépouille (22, 22a).

10. Système d'essuie-glace selon l'une des revendications 1 à 9, **caractérisé en ce que** l'élément de recouvrement (10), sur une région (19) coopérant pour le support axial avec le boîtier de palier d'arbre d'essuie-glace (7), est constitué d'un matériau ayant une résistance accrue, par exemple un matériau métallique.

11. Système d'essuie-glace selon la revendication 10, **caractérisé en ce que** la région coopérant avec le boîtier de palier d'arbre d'essuie-glace (7) est formée par une bague (19) entourant concentriquement l'axe de l'arbre d'essuie-glace (4) sur l'élément de recouvrement (10).

12. Système d'essuie-glace selon l'une des revendications 1 à 11, **caractérisé en ce que** l'élément de recouvrement est construit sous forme de capuchon de recouvrement (10 ; 10a) avec un bord s'engageant par-dessus le boîtier de palier d'arbre d'essuie-glace (7) sur le premier côté, et avec une base de capuchon (18) à travers laquelle fait saillie l'arbre d'essuie-glace (4 ; 4a) et sur laquelle est formée l'au moins une section de matériau (25), qui est apte à être sectionnée par cisaillement, s'engageant derrière la contre-dépouille (22, 22a) sur l'arbre d'essuie-glace (4 ; 4a).

13. Système d'essuie-glace selon l'une des revendications 1 à 12, **caractérisé par** au moins un joint de forme annulaire (17) qui est retenu dans un espace annulaire formé entre l'arbre d'essuie-glace (4, 4a) et la surface interne du boîtier de palier d'arbre d'essuie-glace (7), lequel espace annulaire est délimité axialement par l'élément de recouvrement (10 ; 10a) et à l'opposé, par un élément de palier logé dans le boîtier de palier d'arbre d'essuie-glace (7), par exemple par une douille de palier (8).
